(19) 

Europäisches
Patentamt
European
Patent Office
Office européen
des brevets

(11) **EP 4 531 373 A1**

(12) **EUROPEAN PATENT APPLICATION**
published in accordance with Art. 153(4) EPC

(43) Date of publication:
**02.04.2025  Bulletin 2025/14**

(21) Application number: **23811019.1**

(22) Date of filing: **22.05.2023**

(51) International Patent Classification (IPC):
***H04L 47/62*** *(2022.01)*

(86) International application number:
**PCT/CN2023/095622**

(87) International publication number:
**WO 2023/226948 (30.11.2023 Gazette 2023/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **23.05.2022  CN 202210563387**

(71) Applicant: **Cloud Intelligence Assets Holding
(Singapore)
Private Limited
Singapore 189554 (SG)**

(72) Inventors:
• **HU, Fan
  Chengdu, Sichuan 610095 (CN)**
• **CHU, Tingbin
  Chengdu, Sichuan 610095 (CN)**
• **PEI, Xiaohui
  Chengdu, Sichuan 610095 (CN)**
• **ZHANG, Feng
  Shanghai 200120 (CN)**
• **XU, Li
  Hangzhou, Zhejiang 310030 (CN)**

(74) Representative: **Barker Brettell LLP
100 Hagley Road
Edgbaston
Birmingham B16 8QQ (GB)**

(54) **TRAFFIC CONTROL METHOD AND APPARATUS, ELECTRONIC DEVICE AND READABLE
STORAGE MEDIUM**

(57)    A flow control method is applied to a cloud server
and includes: calculating a first quantity of allocable
bandwidth resources corresponding to user sets with
different priorities respectively in a current resource allocation cycle according to a quantity of bandwidth resources allocated to the user sets with different priorities
in a previous resource allocation cycle; further calculating
a second quantity of allocable bandwidth resources corresponding to each user in the user sets with different
priorities according to the first quantity; and in response to
an access request for data initiated by a user received in
the current resource allocation cycle, performing access
control for the access request based on the second
quantity of the allocable bandwidth resources corre-
sponding to the user. In the above process, bandwidth
resources can be dynamically adjusted, the bandwidth
resources can be rationally allocated, and precise flow
control can be achieved to reduce an affected scope
when physical resources are limited.

In response to an end of a previous resource allocation cycle of the bandwidth resources, calculating a first quantity of allocable bandwidth resources corresponding to the user sets with different priorities respectively in a current resource allocation cycle according to a quantity of bandwidth resources allocated to the user sets with different priorities in the previous resource allocation cycle — 201

Further calculating a second quantity of allocable bandwidth resources corresponding to each user in the user sets with different priorities according to the first quantity — 202

In response to an access request for the data initiated by a user received in the current resource allocation cycle, performing access control for the access request based on the second quantity of the allocable bandwidth resources corresponding to the user — 203

FIG. 2

**Description**

This application claims priority to Chinese Patent Application No. 202210563387.6, filed to China National Intellectual Property Administration on May 23, 2022 and entitled "FLOW CONTROL METHOD, APPARATUS, AND ELECTRONIC DEVICE AND READABLE STORAGE MEDIUM", which is hereby incorporated by reference in its entirety.

**TECHNICAL FIELD**

Embodiments of the present disclosure relate to the field of cloud service technology, and in particular, to a flow control method, an apparatus, and an electronic device and a readable storage medium.

**BACKGROUND**

At present, more and more users choose to use cloud services to store data in the cloud, which can not only solve the problem of insufficient remaining storage space of users' electronic devices, but also help the users to realize data sharing among multiple electronic devices, and prevent users' data from being accidentally lost.

For example, a NAS (Network Attached Storage, NAS) server can provide cloud services for a large number of users at the same time to access data in a shared resource pool.

However, when cloud service providers sell bandwidth resources to users, they usually oversold, that is, the total quantity of bandwidth resources sold is far greater than the actual physical bandwidth resources. Therefore, when multiple users access based on the maximum bandwidth resources at the same time, the physical bandwidth resources on the server may reach a performance bottleneck, resulting in performance degradation, and all users cannot access the server normally, or even crash.

**SUMMARY**

In view of this, one or more embodiments of the present disclosure provide a flow control method, an apparatus, and an electronic device and a readable storage medium to address problems existing in the prior art.

To achieve the above purposes, one or more embodiments of the present disclosure provide technical solutions as follows:

According to a first aspect of an embodiment of the present disclosure, a flow control method is provided, which is applied to a cloud server, where the cloud server stores data provided to users with different priorities to access, and bandwidth resources on the cloud server are periodically allocated to the user sets; the method includes:

in response to an end of a previous resource allocation cycle of the bandwidth resources, calculating a first quantity of allocable bandwidth resources corresponding to the user sets with different priorities respectively in a current resource allocation cycle according to a quantity of bandwidth resources allocated to the user sets with different priorities in the previous resource allocation cycle;

further calculating a second quantity of allocable bandwidth resources corresponding to each user in the user sets with different priorities according to the first quantity; and

in response to an access request for the data initiated by a user received in the current resource allocation cycle, performing access control for the access request based on the second quantity of the allocable bandwidth resources corresponding to the user.

According to a second aspect of an embodiment of the present disclosure, a flow control method is provided, which is applied to a client, where the method includes:

receiving a second quantity of allocable bandwidth resources sent by a cloud server corresponding to each user in user sets with different priorities; wherein the second quantity is calculated by the cloud server according to a first quantity of allocable bandwidth resources corresponding to the user sets with different priorities in a current resource allocation cycle; the first quantity is calculated by the cloud server according to a quantity of bandwidth resources allocated to the user sets with different priorities in a previous resource allocation cycle of bandwidth resources in response to an end of the previous resource allocation cycle; wherein the cloud server stores data provided to users with different priorities to access; the bandwidth resources on the cloud server are periodically allocated to the user sets; and

in response to that a user initiates an access request for the data in the current resource allocation cycle, performing access control for the access request based on the second quantity of the allocable bandwidth resources corresponding to the user.

According to a third aspect of an embodiment of the present disclosure, a flow control apparatus is provided, which is applied to a cloud server, where the cloud server stores data provided to users with different priorities to access, and bandwidth resources on the cloud server are periodically allocated to the user sets; the apparatus includes:

a first computing module, configured to, in response to an end of a previous resource allocation cycle of the bandwidth resources, calculate a first quantity of allocable bandwidth resources corresponding to the user sets with different priorities respectively in a current resource allocation cycle according to a quantity of bandwidth resources allocated to the user sets with different priorities in the previous resource allocation cycle;
a second computing module, configured to further calculate a second quantity of allocable bandwidth resources corresponding to each user in the user sets with different priorities according to the first quantity; and
a first control module, configured to, in response to an access request for the data initiated by a user received in the current resource allocation cycle, perform access control for the access request based on the second quantity of the allocable bandwidth resources corresponding to the user.

According to a fourth aspect of an embodiment of the present disclosure, a flow control apparatus is provided, which is applied to a client, where the apparatus includes:

a receiving module, configured to receive a second quantity of allocable bandwidth resources sent by a cloud server corresponding to each user in user sets with different priorities; wherein the second quantity is calculated by the cloud server according to a first quantity of allocable bandwidth resources corresponding to the user sets with different priorities in a current resource allocation cycle; the first quantity is calculated by the cloud server according to a quantity of bandwidth resources allocated to the user sets with different priorities in a previous resource allocation cycle of bandwidth resources in response to an end of the previous resource allocation cycle; wherein the cloud server stores data provided to users with different priorities to access; the bandwidth resources on the cloud server are periodically allocated to the user sets; and
a second control module, configured to, in response to that a user initiates an access request for the data in the current resource allocation cycle, perform access control for the access request based on the second quantity of the allocable bandwidth resources corresponding to the user.

According to a fifth aspect of an embodiment of the present disclosure, an electronic device is provided, which includes a communication interface, a processor, a memory and a bus, where the communication interface, the processor and the memory are interconnected through the bus;
the memory stores machine readable instructions, and the processor calls the machine readable instructions to execute the above method.

According to a sixth aspect of an embodiment of the present disclosure, a machine readable storage medium is provided, the machine readable storage medium stores machine readable instructions, when the machine readable instructions are called and executed by the processor, the above method is implemented.

Embodiments of the present disclosure provide technical solutions that may include the following beneficial effects:

In the above processes, by assigning different priorities to the user sets and periodically allocating bandwidth resources to the user sets with different priorities to access data, the first quantity of the bandwidth resources allocated to the user sets with different priorities in the current resource allocation period can be readjusted based on the allocation in the previous resource allocation cycle. Further, the second quantity of the bandwidth resources allocated to each user in each priority can be further calculated according to the first quantity, and access control can be performed based on the second quantity corresponding to the user when the user accesses the data. Through the above technical solutions, on the one hand, dynamic adjustment of bandwidth resources can be realized, and the bandwidth resources can be reasonably allocated; on the other hand, precise flow control can be realized to reduce an affected scope when physical resources are limited.

## BRIEF DESCRIPTION OF DRAWINGS

FIG. 1 is a schematic diagram of a user interacting with a cloud server provided by an illustrative embodiment of the present disclosure.
FIG. 2 is a flow diagram of a flow control method provided by an illustrative embodiment of the present disclosure.
FIG. 3 is a schematic diagram of a cloud server performing access control for an access request provided by an illustrative embodiment of the present disclosure.

FIG. 4 is a schematic diagram of adding an access request of a user to a QoS queue provided by an illustrative embodiment of the present disclosure.

FIG. 5 is a schematic diagram of a user interacting with a cloud server through a client provided by an illustrative embodiment of the present disclosure.

FIG. 6 is a flow diagram of another flow control method provided by an illustrative embodiment of the present disclosure.

FIG. 7 is a schematic diagram of a client performing access control for an access request provided by an illustrative embodiment of the present disclosure.

FIG. 8 is a structural diagram of an electronic device in which a flow control apparatus is located provided by an illustrative embodiment of the present disclosure.

FIG. 9 is a block diagram of a flow control apparatus provided by an illustrative embodiment of the present disclosure.

FIG. 10 is a block diagram of another flow control apparatus provided by an illustrative embodiment of the present disclosure.

## DESCRIPTION OF EMBODIMENTS

Illustrative embodiments will be illustrated in detail here, examples of which are shown in the attached drawings. Where the description below relates to drawings, the same numbers in different drawings represent the same or similar elements unless otherwise indicated. Implementations described in the following illustrative embodiments do not represent all implementations consistent with one or more embodiments of the present disclosure. Rather, they are only examples of apparatus and methods that are consistent with some aspects of one or more embodiments of the present disclosure as detailed in the attached claims.

It should be noted that in other embodiments the steps of the method are not necessarily performed in the order indicated and described in the present disclosure. In some other embodiments, the method may include more or fewer steps than described in the present disclosure. In addition, a single step described in the present disclosure may be described by breaking down into multiple steps in other embodiments; the multiple steps described in the present disclosure may also be combined into a single step description in other embodiments.

When selling bandwidth resources, cloud service providers usually divide the sold bandwidth resources into two forms of best effort and must guarantee, and configures different isolation strategies to provide different guarantee level for these two types of sold resources, so as to ensure that stable and reliable cloud services can be provided to some users when physical bandwidth resources are limited.

For example, a QoS (Quality of Service, Quality of Service) strategy is configured to distinguish flow of different services, flow is divided based on a quintuple matching flow classification rule, and bandwidth of critical service flow is ensured based on a configured rate limiting rule to improve network quality.

However, although affected scope of key users can be reduced by above technical means such as isolating some users based on QoS strategies. When real-time service is undertook, each user still cannot avoid being affected by other users because strategies cannot be adjusted in real time.

In view of this, the present disclosure provides a periodic dynamic allocation strategy, bandwidth resources allocated to user sets with different priorities to access data in a current cycle are determined based on allocation of a previous cycle, and allocable bandwidth resources are further determined for different users in user sets with the same priority, and a technical solution of precise flow control is achieved.

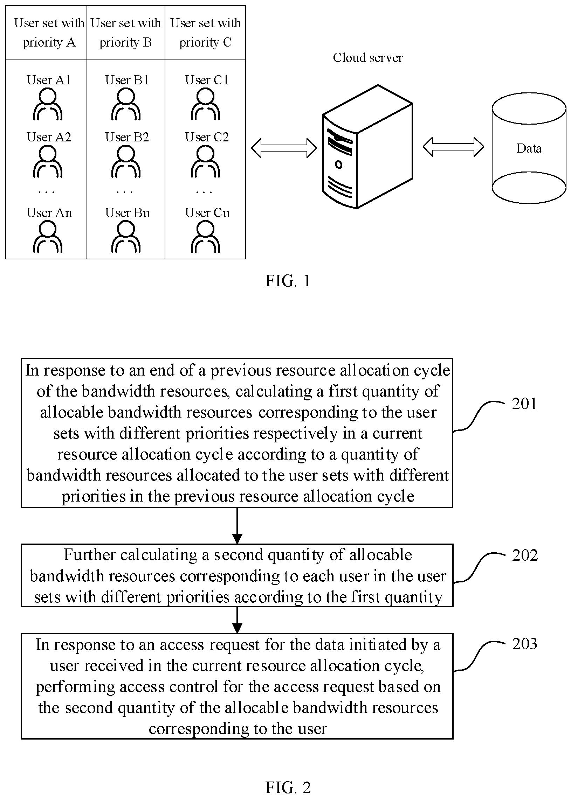

Reference please made to FIG. 1, FIG. 1 is a schematic diagram of a user interacting with a cloud server provided by an illustrative embodiment of the present disclosure. As shown in FIG. 1, user A1 to user An belongs to a user set with priority A, user B1 to user Bn belong to a user set with priority B, and user C1 to user Cn belongs to a user set with priority C. All user sets with different priorities can access data stored on the cloud server.

During an implementation, bandwidth resources on the cloud server can be periodically allocated to the user sets.

In one example, when bandwidth resources are allocated for the first time, a different allocation ratio can be preset for three user sets in FIG. 1 and bandwidth resources can be allocated according to the ratio.

Then, in response to an end of a previous resource allocation cycle of the bandwidth resources, a first quantity of allocable bandwidth resources corresponding to the user sets with different priorities is calculated respectively in the current resource allocation cycle according to a quantity of bandwidth resources allocated to the user sets with different priorities in the previous resource allocation cycle.

For example, quantities of resource bandwidth allocated to user sets of three priorities shown in FIG. 1 in the previous resource allocation cycle can be calculated, and then quantities of allocable bandwidth resources corresponding to the user sets of the three priorities in the current resource allocation cycle are determined based on a statistics result and a preset calculation formula.

Then, a second quantity of allocable bandwidth resources corresponding to each user in the user sets with different priorities can be further calculated according to the first quantity.

For example, assuming that a result of a quantity of allocable bandwidth resources corresponding to the user set with priority A in FIG. 1 is 10Gbps, a quantity of the allocable bandwidth resources corresponding to user A1 in the user set with priority A can be further calculated according to a preset algorithm. The same process is performed on the other two user sets in FIG. 1.

Subsequently, in response to an access request for the data initiated by a user received in the current resource allocation cycle, access control can be performed for the access request based on the second quantity of the allocable bandwidth resources corresponding to the user.

For example, assuming that a calculated quantity of the allocable bandwidth resources corresponding to user A1 is 1Gbps, access control can be performed for the access request according to 1 GB/S as a flow threshold speed when the access request for data initiated by the user A1 is received in the current resource allocation cycle.

In the above processes, by assigning different priorities to the user sets and periodically allocating bandwidth resources to the user sets with different priorities to access data, the first quantity of the bandwidth resources allocated to the user sets with different priorities in the current resource allocation period can be readjusted based on the allocation in the previous resource allocation cycle. Further, the second quantity of the bandwidth resources allocated to each user in each priority can be further calculated according to the first quantity, and access control can be performed based on the second quantity corresponding to the user when the user accesses the data. Through the above technical solutions, on the one hand, dynamic adjustment of bandwidth resources can be realized, and the bandwidth resources can be reasonably allocated; on the other hand, precise flow control can be realized to reduce an affected scope when physical resources are limited.

The following is a detailed description of the flow control method of the present disclosure combined with attached drawings.

Reference please made to FIG. 2, FIG. 2 is a flow diagram of a flow control method provided by an illustrative embodiment of the present disclosure, applied to a cloud server, where the cloud server stores data provided to users with different priorities to access, and bandwidth resources on the cloud server are periodically allocated to the user sets. As shown in FIG. 2, the method includes the following execution steps:

step 201, in response to an end of a previous resource allocation cycle of the bandwidth resources, calculating a first quantity of allocable bandwidth resources corresponding to the user sets with different priorities respectively in a current resource allocation cycle according to a quantity of bandwidth resources allocated to the user sets with different priorities in the previous resource allocation cycle;

step 202, further calculating a second quantity of allocable bandwidth resources corresponding to each user in the user sets with different priorities according to the first quantity; and

step 203, in response to an access request for the data initiated by a user received in the current resource allocation cycle, performing access control for the access request based on the second quantity of the allocable bandwidth resources corresponding to the user.

Each user in the user sets with different priorities can perform read operation or write operation when accessing data stored on the cloud server, which is not limited in the present disclosure.

The bandwidth resources on the cloud server, that is, a bandwidth capacity, refers to a quantity of datum that can be transmitted at a fixed time, which is used to represent ability of a communication line to transmit data, that is, a quantity of data that can be transmitted on the line per unit time, and a commonly used unit thereof is bps (bit per second). Generally speaking, the bandwidth resources allocated by the cloud server to the user can be an upload rate of a user or a download rate of a user, which is not limited in the present disclosure.

It should be noted that because the bandwidth resources on the cloud server can be periodically allocated oriented to the user sets with different priorities accessing the data based on a preset resource allocation cycle, thus it is necessary to specify the resource allocation cycle and the bandwidth resources allocated to the user sets with different priorities at initialization.

In one implementation shown, the bandwidth resources can be allocated to the user sets with different priorities according to a preset ratio between the different priorities at initialization.

For example, as shown in FIG. 1, at initialization, it can be preset to allocate 60% of the bandwidth resources to the user set with priority A and allocate 40% of the bandwidth resources to the user set with priority B, and no bandwidth resources can be allocated to the user set with priority C. Assuming that the total bandwidth resources on the cloud server are 10Gbps, at initialization, the user set with priority A has 6 Gbps of the bandwidth resources, the user set with priority B has 4 Gbps of the bandwidth resources, and the user set with priority C has 0 Gbps of the bandwidth resources.

In the present embodiment, in response to the end of the previous resource allocation cycle of the bandwidth resources, the first quantity of the allocable bandwidth resources corresponding to the user sets with different priorities can be calculated respectively in the current resource allocation cycle according to the quantity of the bandwidth resources allocated to the user sets with different priorities in the previous resource allocation cycle.

For example, after the end of the previous resource allocation cycle, a quantity of the bandwidth resources allocated to the user sets with different priorities in FIG. 1 in the previous resource allocation cycle can be obtained, and then, quantities of the allocable bandwidth resources respectively corresponding to the user sets with priorities A, B, and C in the current resource allocation cycle are calculated according to quantities of the bandwidth resources allocated to the user sets with the three priorities respectively in the previous resource allocation cycle.

In one implementation shown, the priority includes high priority, medium priority and low priority;

further, a quantity H1 of bandwidth resources allocated to a user set with high priority, a quantity M1 of bandwidth resources allocated to a user set with medium priority, and a quantity L1 of bandwidth resources allocated to a user set with low priority in the previous resource allocation cycle can be counted; and
in addition, the first quantity of the allocable bandwidth resources corresponding to the user sets with different priorities in the current resource allocation cycle is calculated by the following formula:

$$H2=MIN(H1, MAX(a*S, S-M1));$$

$$M2=MIN(M1, S-H2);$$

$$L2=S-H2-M2;$$

where, H2, M2, and L2 are quantities of the bandwidth resources allocated to the user sets with high priority, medium priority, and low priority, respectively, in the current resource allocation cycle; a is a preset value.

In one example, assuming that H1=7Gbps, M1=3.5Gbps, L1=1Gbps, S=10Gbps, and a=0.6, then through the above formula, it can be obtained that:

$$H2=MIN(H1, MAX(a*S, S-M1))=MIN(6.5, MAX(6，6.5))=6.5Gbps;$$

$$M2=MIN(M1, S-H2)=MIN(3.5, 3)=3Gbps;$$

$$L2=S-H2-M2=10-6.5-3=0.5Gbps.$$

In another example, assuming that H1=5.5 Gbps, M1=4.5 Gbps, L1=2 Gbps, S=10 Gbps, and a=0.6, then through the above formula, it can be obtained that:

$$H2=MIN(H1, MAX(a*S, S-M1))=MIN(5.5, MAX(6，5.5))=5.5 Gbps;$$

$$M2=MIN(M1, S-H2)= MIN(4.5, 4.5)=4.5 Gbps;$$

$$L2=S-H2-M2=10-5.5-4.5=0 Gbps.$$

It is worth noting that in the above two examples, since a preset a is 0.6, it means that the maximum quantity of the bandwidth resources allocated to the user sets of high-priority and medium-priority is 6 Gbps and 4 Gbps, respectively.

Therefore, in the above process, when the bandwidth resources of the high priority are under large pressure (H1>6 Gbps) and the bandwidth resources of the medium priority are under small pressure (M1<4 Gbps), the high priority needs to take precedence over the low priority to seize the remaining bandwidth resources of the medium priority. When the bandwidth resources of the high priority are under low pressure (H1<6 Gbps) and the bandwidth resources of the medium priority are under high pressure (M1>4 Gbps), the medium priority needs to take precedence over the low priority to seize the remaining bandwidth resources of the high priority.

It can be understood that when the bandwidth resources of the high priority and the medium priority is under high pressure, the bandwidth resource of the low priority need to be occupied. When the bandwidth resources of the high priority and the medium priority is under small pressure, the low priority can use the remaining bandwidth resources. The reasoning process is the same, which is not repeated here.

In addition, since the allocation of the bandwidth resources can allow a certain degree of increase or decrease, quantities of allocated to the user sets with high priority, medium priority and low priority respectively in the current resource allocation cycle determined by the above calculation process are theoretical values. Therefore, when the quantity of the allocable bandwidth resources corresponding to the user sets with different priorities in the next resource allocation cycle must be calculated according to actual values of counted quantities ultimately allocated to the user sets with high priority, medium priority, and low priority respectively in the current resource allocation cycle.

In this embodiment, the second quantity of the allocable bandwidth resources corresponding to each user in the user sets with different priorities can be further calculated according to the first quantity.

For example, in FIG. 1, a quantity of the allocable bandwidth resources corresponding to each user in the user sets can be determined by calculating each user in the user set with priority A, that is, user A1- user An, and determining a quantity of the allocable bandwidth resources corresponding to the each user. The same process is performed on the user sets with other two priority in FIG. 1, which are not repeated here.

In one implementation shown, the following processes can be performed for different priorities respectively: performing following processes for different priorities respectively:

determining a bandwidth resource occupied by each user in a user set with a current priority;
calculating a ratio of the bandwidth resource occupied by each user to bandwidth resources occupied by the user set with the current priority; and
calculating the second quantity of the allocable bandwidth resources corresponding to each user based on the ratio and the first quantity.

For example, it takes the high priority as an example. Assuming that bandwidth resources occupied by user A in the user set with high priority is 2Gbps, and bandwidth resources occupied by the user set with high priority is 5Gbps, while allocable bandwidth resources corresponding to the user set with high priority in the current resource allocation cycle is 8Gbps.

Then by performing the above calculation process, it can be calculated that the above ratio is 2/5=0.4, and the second quantity of the allocable bandwidth resources corresponding to user A is 8*0.4= 3.2Gbps. The calculation process of other users in the user set with high priority is the same, which will not be repeated here.

Similarly, for medium priority and low priority, it is the same calculation process, which is not repeated here.

Understandably, for FIG. 1, the above calculation process can be used to calculate the quantity of the allocable bandwidth resources corresponding to each user in FIG. 1.

It should be noted that the ratio of the bandwidth resources occupied by each user to the bandwidth resources occupied by the user set with the current priority can be calculated based on a quantity of the bandwidth resources in the previous resource allocation cycle or based on a mean value of the bandwidth resources counted in the last N resource allocation cycles, which is not limited in the present disclosure.

It should be noted that the above cloud server can control the user's permission to use bandwidth resources by allocating tokens, a quantity of the resource bandwidth allocated to the user, that is, a quantity of allocated tokens, then when calculating the quantity of the allocable bandwidth resources, it is equivalent to calculating the quantity of the allocable tokens.

For example, when calculating the quantity of the allocable tokens corresponding to the user sets with different priorities in the current resource allocation cycle, a quantity H3 of tokens allocated to the user set with high priority, a quantity M3 of tokens allocated to the user set with medium priority, and a quantity L3 of tokens allocated to the user set with low priority in the previous resource allocation cycle can be counted;

then, the quantity of the allocable tokens corresponding to the user sets with different priorities in the current resource allocation cycle is calculated by the following formula:

$$H4=MIN(H3, MAX(b*T, T-M3));$$

$$M4=MIN(M3, T-H4);$$

$$L4=T-H4-M4;$$

where, H4, M4, and L4 are quantities of tokens allocated to the user sets with high priority, medium priority, and low priority, respectively, in the current resource allocation cycle; b is a preset value.

For further example, when further calculating a quantity of the allocable tokens corresponding to each user in the user sets with different priorities according to the quantities of tokens allocated to the user sets with high priority, medium priority, and low priority mentioned above, the following procedure can be performed for different priorities:

determining bandwidth resources occupied by each user in the user set with the current priority when accessing data through the tokens;

calculating a ratio of the bandwidth resources occupied by each user to the bandwidth resources occupied by the user set with the current priority; and

calculating the second quantity of allocable bandwidth resources corresponding to each user based on the ratio and the first quantity.

Take the user sets with high priority as an example, assuming that the quantity of tokens used by user A in the user sets with high priority is 200, then it is calculated that the bandwidth resources occupied by the user A to access data through these 200 tokens is 2Gbps, a total bandwidth resources occupied by each user in the user set with high priority is 5Gbps, and the allocable bandwidth resources corresponding to the user set with high priority in the current resource allocation cycle is 8Gbps. Then by performing the above calculation process, it can be calculated that the above ratio is 2/5=0.4, and the second quantity of the allocable bandwidth resources corresponding to user A is 8*0.4= 3.2Gbps.

In this embodiment, in response to the access request for the data initiated by the user received in the current resource allocation cycle, the access control can be performed for the access request based on the second quantity of the allocable bandwidth resources corresponding to the user.

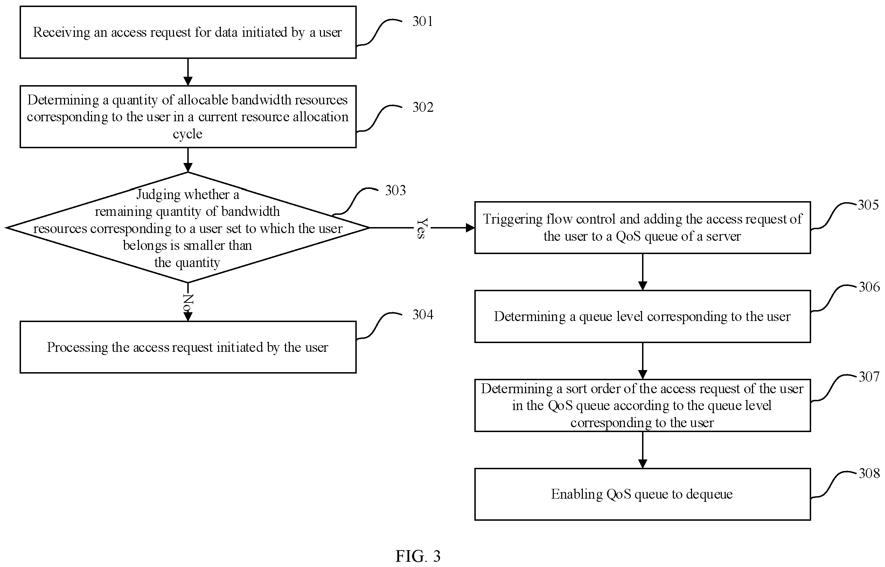

Reference please made to FIG. 3, FIG. 3 is a schematic diagram of a cloud server provided by an illustrative embodiment of the present disclosure, as shown in FIG. 3, the following steps is included:

step 301, receiving an access request for data initiated by a user;

step 302, determining a quantity of allocable bandwidth resources corresponding to the user in a current resource allocation cycle;

step 303, judging whether a remaining quantity of bandwidth resources corresponding to a user set to which the user belongs is smaller than the quantity;

step 304, if no, processing the access request initiated by the user;

step 305, if yes, triggering flow control and adding the access request of the user to a QoS queue of a server;

where different QoS queues can be used for user sets with different priorities.

For example, assuming that a priority of the user set to which the user belongs is high priority, then the second quantity of the allocable bandwidth resources corresponding to the user calculated based on step 202 in the current resource cycle is 3Gbps, and the first quantity of the allocable bandwidth resources corresponding to the user set with high priority calculated based on step 201 is 7Gbps. But now there is only 2 Gbps left for the user set with high priority.

For example, if it is judged that the remaining quantity of the bandwidth resources corresponding to the user set to which the user belongs is smaller than the quantity of the allocable bandwidth resources corresponding to the user when step 303 is performed, step 305 is performed to trigger flow control and add the access request of the user to the QoS queue corresponding to the user set with high priority.

Step 306, determining a queue level corresponding to the user.

The cloud server can be further divided into three queue levels of high, medium and low for each user in the user sets with different priorities in advance.

For example, each user in the user set with high priority can be further divided into three queue levels of high, medium and low, and the same process is performed on the medium priority and low priority.

Step 307, determining a sort order of the access request of the user in the QoS queue according to the queue level corresponding to the user.

For example, if the QoS queue corresponding to the user set to which the user belongs has a preset proportion of 6:3:1 for the three queue levels of high, medium and low, and the queue level corresponding to the user is high, the access request of the user can be added to a portion of the QoS queue with a proportion of 60% according to the queue level corresponding to the user.

Step 308, enabling the QoS queue to dequeue.

**In** response to the above cloud server reallocating the bandwidth resources, that is, releasing the bandwidth resources, to allocate the access request in the QoS queue, the bandwidth resources can be allocated to each access request according to the sort order of the QoS queue, and the access request is processed based on the allocated bandwidth resources.

Because different queue proportions are allocated to the three queue levels of high, medium and low, when the bandwidth resources are allocated according to the sort order of the QoS queue, they are also allocated according to the queue proportion. In this way, different queue levels can be sorted when the queue dequeues.

In addition, in addition to dividing different queue levels for users, a user whitelist can also be set, so that users in the whitelist can be sent directly to the queue without sorting in the queue, or a user blacklist can be set, so that users in the blacklist will not be sent directly to the queue, which is not limited in the present disclosure.

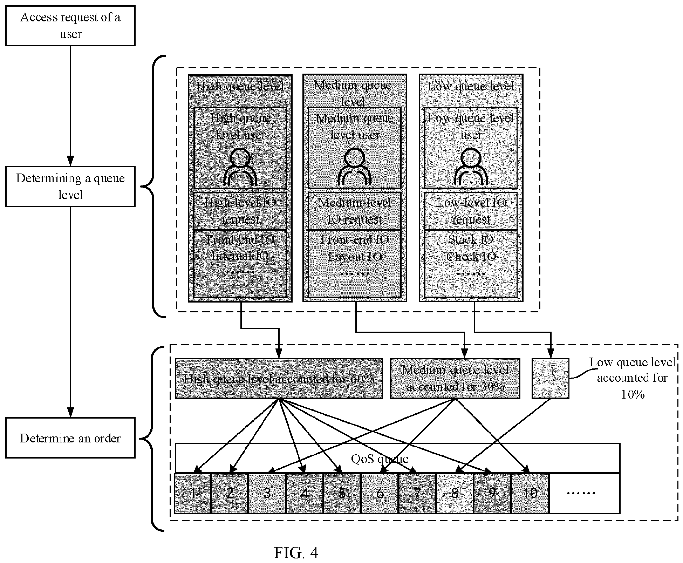

Reference please made to FIG. 4, FIG. 4 is a schematic diagram of adding an access request of a user to a QoS queue provided by an illustrative embodiment of the present disclosure. As shown in FIG. 4, in the QoS queue, a corresponding proportion of queues of high, medium and low levels in the whole QoS queue is 6:3: 1.

According to the preceding step 306, when adding the access request of the user to the QoS queue, the queue to be added can be determined according to the queue level corresponding to the user.

For example, for premium paying users or important users, the access request of the user can be added to the high-level queue shown in FIG. 4. By default, if the users are not divided into queue levels, the access request of the user can be added to the medium-level queue shown in FIG. 4.

It is worth noting that in addition to the queue levels divided for users in advance, the access request of the user can also be divided into different levels. For example, different types of IO requests can be divided into a high-level IO request, a medium-level IO request and a low-level IO request.

For example, if the type of IO corresponding to the access request of the user is front-end IO, as shown in FIG. 4, the front-end IO is a high-level IO request, then the access request of the user is added to the high-level queue shown in FIG. 4.

As can be seen from the preceding step 307, after adding the access request of the user to the QoS queue, the access request need to be sorted to determine the sort order of different access requests in the QoS queue.

As shown in FIG. 4, in the first ten positions in the QoS queue, according to the preset proportion of 6:3:1, the positions corresponding to the high, medium and low queue levels are allocated respectively, and an order is set for these ten positions, that is, the positions of the high queue level are 1, 2, 4, 5, 7 and 9, the positions of the medium queue level are 3, 6 and 10, and the position of the low queue level is 8.

As can be seen from the preceding step 308, the QoS queue in FIG. 4, when is enabled to dequence, ejects access requests from the queue in the order of positions 1 to 10, allocates bandwidth resources for each access request, and processes the access requests based on the allocated bandwidth resources. When the cloud server is used for access control, there are usually multiple nodes in a cluster. In order to ensure the accuracy of flow control, a central node generally needs to collect and allocate cluster resources in a unified manner, and the central node judges the flow control. However, when other nodes send queues to the central node, a path will be increased, resulting in delay.

Therefore, the access control can be judged by the client side to reduce the delay.

In one implementation shown, the second quantity of the allocable bandwidth resources corresponding to each user in the user sets with different priorities can be sent to a client to which each user is located, so that the client, in response to that the user initiates the access request for the data in the current resource allocation cycle, performs access control for the access request based on the second quantity of the allocable bandwidth resources corresponding to the user.

For example, the cloud server can send the second quantity of the allocable bandwidth resources corresponding to each user in the user sets with different priorities to the client where each user is located, and then when the user initiates the access request for the data in the current resource allocation cycle, the client performs access control for the access request of the user according to the second quantity of the allocable bandwidth resources corresponding to the user sent by the cloud server.

In the above processes, by assigning different priorities to the user sets and periodically allocating bandwidth resources to the user sets with different priorities to access data, the first quantity of the bandwidth resources allocated to the user sets with different priorities in the current resource allocation period can be readjusted based on the allocation in the previous resource allocation cycle. Further, the second quantity of the bandwidth resources allocated to each user in each priority can be further calculated according to the first quantity, and access control can be performed based on the second quantity corresponding to the user when the user accesses the data. Through the above technical solutions, on the one hand, dynamic adjustment of bandwidth resources can be realized, and the bandwidth resources can be reasonably allocated; on the other hand, precise flow control can be realized to reduce an affected scope when physical resources are limited.

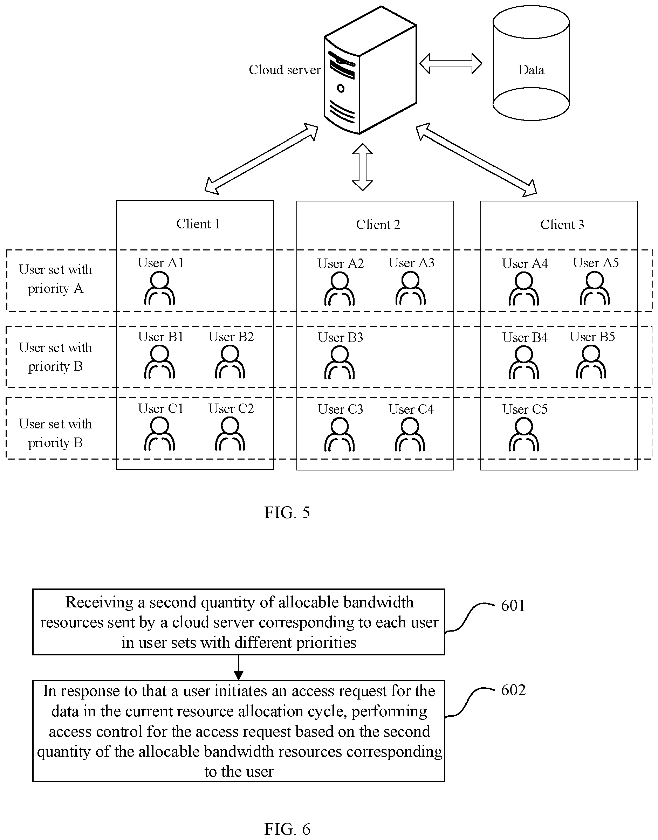

Reference please made to FIG. 5, FIG. 5 is a schematic diagram of a user interacting with a cloud server through a client provided by an illustrative embodiment of the present disclosure. As shown in FIG. 5, A, B, and C are used to represent different priorities respectively, and different clients can send access requests of users with different priorities to the cloud server.

For example, in FIG. 5, user A1, user B1, user B2, user C1, and user C2 can initiate access requests for data through client 1; user A2, user A3, user B3, user C3, and user C4 can initiate access requests for data through client 2; user A4, user A5, user B4, user B3, and user C5 can initiate access requests for data through client 3.

Reference please made to FIG. 6, FIG. 6 is a flow diagram of another flow control method provided by an illustrative embodiment of the present disclosure, applied to the client, where the method includes the following steps:

step 601, receiving a second quantity of allocable bandwidth resources sent by a cloud server corresponding to each user in user sets with different priorities; wherein the second quantity is calculated by the cloud server according to a first quantity of allocable bandwidth resources corresponding to the user sets with different priorities in a current resource allocation cycle; the first quantity is calculated by the cloud server according to a quantity of bandwidth resources allocated to the user sets with different priorities in a previous resource allocation cycle of bandwidth resources in response to an end of the previous resource allocation cycle; wherein the cloud server stores data provided to users with different priorities to access; the bandwidth resources on the cloud server are periodically allocated to the user sets; and

step 602, in response to that a user initiates an access request for the data in the current resource allocation cycle, performing access control for the access request based on the second quantity of the allocable bandwidth resources corresponding to the user.

For processes of calculating the first quantity and the second quantity in step 601 above, persons skilled in the art can refer to records on the cloud server side, which will not be repeated here.

For example, as shown in FIG. 5, the cloud server can send the second quantity of the allocable bandwidth resources corresponding to each user in the user sets with different priorities to client 1, client 2, and client 3. Taking client 1 in FIG. 5 as an example, assuming that the cloud server send a quantity M of allocable bandwidth resources corresponding to user A1 in the user sets with priority A to client 1 used by user A1, and then client 1 can, in response to that the user A1 initiates the access request for the data in the current resource allocation cycle, performs access control for the access request of the user A1 according to the quantity M of the allocable bandwidth resources corresponding to the user A1.

In one implementation shown, the client, when performing step 602, may, in response to that the user initiates the access request for the data in the current resource allocation cycle, determine the second quantity of the allocable bandwidth resources corresponding to the user;

judge whether a remaining quantity of the bandwidth resources corresponding to a user set to which the user belongs is smaller than the second quantity; and

if yes, trigger flow control and add the access request of the user to a QoS queue.

In one implementation shown, each user in the user sets with different priorities is further divided into three queue levels of high, medium and low;

further, the client, when performing step 602, may add the access request of the user to a QoS queue corresponding to the user set to which the user belongs, and determine a sort order of the access request of the user in the QoS queue according to a queue level corresponding to the user.

In one implementation shown, the above client can, in response to that the cloud server redistributes the bandwidth resources, allocate the bandwidth resources for each access request in turn according to the sort order of the QoS queue, and send the access request to the cloud server for processing based on the allocated bandwidth resources.

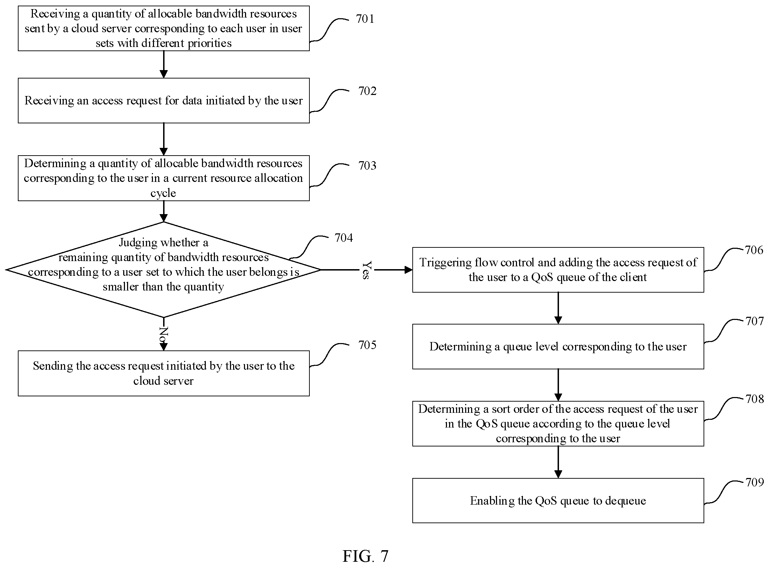

Reference please made to FIG. 7, FIG. 7 is a schematic diagram of a client performing access control for an access request provided by an illustrative embodiment of the present disclosure, as shown in FIG. 7, the following steps is included:

step 701: receiving a quantity of allocable bandwidth resources sent by a cloud server corresponding to each user in user sets with different priorities;

step 702, receiving an access request for data initiated by the user;

step 703, determining a quantity of allocable bandwidth resources corresponding to the user in a current resource allocation cycle;

step 704, judging whether a remaining quantity of bandwidth resources corresponding to a user set to which the user belongs is smaller than the quantity;

step 705, if no, sending the access request initiated by the user to the cloud server;

step 706, if yes, triggering flow control and adding the access request of the user to a QoS queue of the client;

where different QoS queues can be used for user sets with different priorities on the client.

For example, assuming that a priority of the user set to which the user belongs is high priority, then the quantity of the allocable bandwidth resources corresponding to the user in the current resource cycle is 3Gbps, and the first quantity of the allocable bandwidth resources corresponding to the user set with high priority is 7Gbps. But now there is only 2 Gbps left for the user set with high priority.

For example, if it is judged that the remaining quantity of the bandwidth resources corresponding to the user set to which the user belongs is smaller than the quantity of the allocable bandwidth resources corresponding to the user when step 704 is performed, step 706 is performed to trigger flow control and add the access request of the user to the QoS queue corresponding to the user set with high priority.

Step 707, determining a queue level corresponding to the use.

The client can be further divided into three queue levels of high, medium and low for each user in the user sets with different priorities in advance.

For example, each user in the user set with high priority can be further divided into three queue levels of high, medium and low, and the same process is performed on the medium priority and low priority.

Step 708, determining a sort order of the access request of the user in the QoS queue according to the queue level corresponding to the user.

For example, if the QoS queue corresponding to the user set to which the user belongs has a preset proportion of 6:3:1 for the three queue levels of high, medium and low, and the queue level corresponding to the user is high, the access request of the user can be added to a portion of the QoS queue with a proportion of 60% according to the queue level corresponding to the user.

Step 709, enabling the QoS queue to dequeue.

In response to the above cloud server reallocating the bandwidth resources, that is, releasing the bandwidth resources, to allocate the access request in the QoS queue, the bandwidth resources can be allocated to each access request according to the sort order of the QoS queue, and the access request is sent to the cloud server on order based on the allocated bandwidth resources.

Because different queue proportions are allocated to the three queue levels of high, medium and low, when the bandwidth resources are allocated according to the sort order of the QoS queue, they are also allocated according to the queue proportion. In this way, different queue levels can be sorted when the queue dequeues.

In addition, in addition to dividing different queue levels for users, a user whitelist can also be set, so that users in the whitelist can be sent directly to the queue without sorting in the queue, or a user blacklist can be set, so that users in the blacklist will not be sent directly to the queue, which is not limited in the present disclosure.

For the detailed process of the QoS queue in step 707 to step 709 above, reference please made to the description in FIG. 4 above, which will not be repeated here.

In the process shown in FIG. 7 above, the client side performs access control based on the quantity of the allocable bandwidth resources corresponding to each user in the user sets with different priorities delivered by the cloud server, so that the client side can directly judge the access request without passing judgment by a central node of the cloud server, which can reduce a quantity of network interactions and reduce the delay, and thus achieve a set of flow control logic that is judged locally by the client, and updated asynchronous by the cloud server. In the above processes, by assigning different priorities to the user sets and periodically allocating bandwidth resources to the user sets with different priorities to access data, the first quantity of the bandwidth resources allocated to the user sets with different priorities in the current resource allocation period can be readjusted based on the allocation in the previous resource allocation cycle. Further, the second quantity of the bandwidth resources allocated to each user in each priority can be further calculated according to the first quantity, and access control can be performed based on the second quantity corresponding to the user when the user accesses the data. Through the above technical solutions, on the one hand, dynamic adjustment of bandwidth resources can be realized, and the bandwidth resources can be reasonably allocated; on the other hand, precise flow control can be realized to reduce an affected scope when physical resources are limited.

A device capable of implementing the above method is also provided in an illustrative embodiment of the present disclosure.

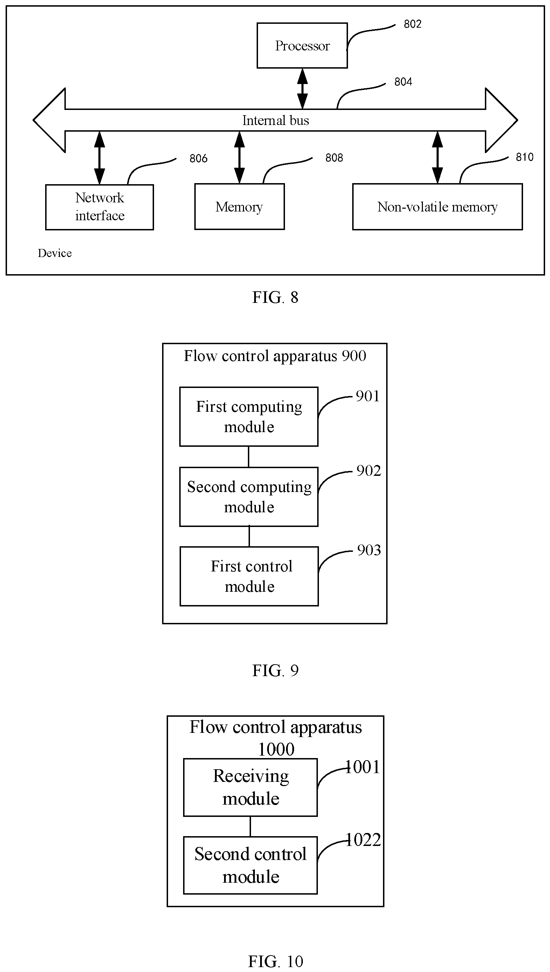

FIG. 8 is a schematic structure diagram of a device provided by an illustrative embodiment. Reference please made to FIG. 8, at a hardware level, the device includes a processor 802, an internal bus 804, a network interface 806, a memory 808, and a non-volatile memory 810, and of course may include other hardware required by a business. One or more embodiments of the present disclosure may be implemented in a software manner, for example, the processor 802 reads a corresponding computer program from non-volatile memory 810 into memory 809 and then runs it. Of course, in addition to the software implementation method, one or more embodiments in the present disclosure do not exclude other implementation methods, such as logic devices or hardware and software combination methods, etc., that is, an execution body of the following processing flow is not limited to each logical unit, but can also be hardware or logic devices.

Refer to FIG. 9, in a software implementation, a flow control apparatus 900 is provided, applied to a cloud server, where the cloud server stores data provided to users with different priorities to access; where bandwidth resources on the cloud server are periodically allocated to user sets; the apparatus the cloud server stores data provided to users with different priorities to access, and bandwidth resources on the cloud server are periodically allocated to the user sets; the apparatus includes:

> a first computing module 901, configured to, in response to an end of a previous resource allocation cycle of the bandwidth resources, calculate a first quantity of allocable bandwidth resources corresponding to the user sets with different priorities respectively in a current resource allocation cycle according to a quantity of bandwidth resources allocated to the user sets with different priorities in the previous resource allocation cycle;

a second computing module 902, configured to further calculate a second quantity of allocable bandwidth resources corresponding to each user in the user sets with different priorities according to the first quantity; and

a first control module 903, configured to, in response to an access request for the data initiated by a user received in the current resource allocation cycle, perform access control for the access request based on the second quantity of the allocable bandwidth resources corresponding to the user.

Optionally, the apparatus 900 also includes:

an initialization module 904, configured to allocate the bandwidth resources to the user sets with different priorities according to a preset ratio between the different priorities at initialization.

Optionally, the priority includes high priority, medium priority and low priority;

the first computing module 901, further:

count a quantity H1 of bandwidth resources allocated to a user set with high priority, a quantity M1 of bandwidth resources allocated to a user set with medium priority, and a quantity L1 of bandwidth resources allocated to a user set with low priority in the previous resource allocation cycle; and

calculate the first quantity of the allocable bandwidth resources corresponding to the user sets with different priorities in the current resource allocation cycle by the following formula:

$$H2=MIN(H1, MAX (a*S, S-M1));$$

$$M2=MIN(M1, S-H2);$$

$$L2=S-H2-M2;$$

where, H2, M2, and L2 are quantities of the bandwidth resources allocated to the user sets with high priority, medium priority, and low priority, respectively, in the current resource allocation cycle; a is a preset value.

Optionally, the second computing module 902, further:

perform following processes for different priorities respectively:

determining a bandwidth resource occupied by each user in a user set with a current priority;

calculating a ratio of the bandwidth resource occupied by each user to bandwidth resources occupied by the user set with the current priority; and

calculating the second quantity of the allocable bandwidth resources corresponding to each user based on the ratio and the first quantity.

Optionally, the data is accessed by the user via a token allocated by the cloud server;

the first computing module 901, further:

calculate a quantity of allocable tokens corresponding to the user sets with different priorities respectively in the current resource allocation cycle according to a quantity of tokens allocated to the user sets with different priorities in the previous resource allocation cycle; and

calculate the first quantity of the allocable bandwidth resources corresponding to the user sets with different priorities respectively according to a ratio of the quantity of the allocable tokens corresponding to the user sets with different priorities to a total quantity of allocable tokens of the cloud server.

Optionally, the first control module 903, further:

send the second quantity of the allocable bandwidth resources corresponding to each user in the user sets with different priorities to a client to which each user is located, so that the client, in response to that the user initiates the access request for the data in the current resource allocation cycle, performs access control for the access request based on the second quantity of the allocable bandwidth resources corresponding to the user.

The realization process of the functions and roles of each module in the above apparatus 900 is detailed in the realization process of the corresponding steps in the above flow control method applied to the cloud server, and relevant points can be referred to the partial description of the method implementation, which is not repeated here.

Reference please made to FIG. 10, in a software implementation, another flow control apparatus 1000 is provided, applied to a client, where the apparatus includes:

a receiving module 1001, configured to receive a second quantity of allocable bandwidth resources sent by a cloud server corresponding to each user in user sets with different priorities; wherein the second quantity is calculated by the cloud server according to a first quantity of allocable bandwidth resources corresponding to the user sets with different priorities in a current resource allocation cycle; the first quantity is calculated by the cloud server according to a quantity of bandwidth resources allocated to the user sets with different priorities in a previous resource allocation cycle of bandwidth resources in response to an end of the previous resource allocation cycle; wherein the cloud server stores data provided to users with different priorities to access; the bandwidth resources on the cloud server are periodically allocated to the user sets; and

a second control module 1002, configured to, in response to that a user initiates an access request for the data in the current resource allocation cycle, perform access control for the access request based on the second quantity of the allocable bandwidth resources corresponding to the user.

Optionally, the second control module 1002, further:

in response to that the user initiates the access request for the data in the current resource allocation cycle, determine the second quantity of the allocable bandwidth resources corresponding to the user;

judge whether a remaining quantity of the bandwidth resources corresponding to a user set to which the user belongs is smaller than the second quantity; and

if yes, trigger flow control and adding the access request of the user to a QoS queue.

Optionally, each user in the user sets with different priorities is further divided into three queue levels of high, medium and low;

the second control module 1002, further:

add the access request of the user to a QoS queue corresponding to the user set to which the user belongs, and determining a sort order of the access request of the user in the QoS queue according to a queue level corresponding to the user.

Optionally, the apparatus 1000 also includes:

an allocation module 1003, configured to, in response to that the cloud server redistributes the bandwidth resources, allocate the bandwidth resources for each access request in turn according to the sort order of the QoS queue, and sending the access request to the cloud server for processing based on the allocated bandwidth resources.

The realization process of the functions and roles of each module in the above apparatus 1000 is detailed in the realization process of the corresponding steps in the above flow control method applied to the client, and relevant points can be referred to the partial description of the method implementation, which is not repeated here.

The apparatus implementations described above are only schematic, where the units described as separate components may or may not be physically separate, and the components shown as units may or may not be physical modules, that is, they may be located in one place, or they may be distributed to multiple network modules. Some or all of the units or modules can be selected according to the actual needs to achieve the purpose of the present disclosure. Ordinary persons skilled in the art can understand and implement without creative effort.

The system, apparatus, module or unit described in the above embodiments may be implemented specifically by a computer chip or entity, or by a product having a certain function. A typical implementation device is a computer, which may take the form of a personal computer, laptop computer, cellular phone, camera phone, smart phone, personal digital assistant, media player, navigation device, E-mail receiver, game console, tablet computer, wearable device, or any combination of these devices.

In a typical configuration, a computer includes one or more central processing units (CPU), input/output interfaces, network interfaces, and memory.

A memory may include non-permanent memory in computer readable medium, random access memory (RAM) and/or non-volatile memory in the form of read-only memory (ROM) or flash memory (flash RAM). The memory is an example of a computer readable medium.

Computer readable medium, including permanent and non-permanent, removable and non-removable medium, can be stored by any method or technology. Information can be computer-readable instructions, data structures, modules of programs, or other data. Examples of computer storage medium include, but not limited to phase change random access memory (PRAM), static random access memory (SRAM), dynamic random access memory (DRAM), other types of random access memory (RAM), read-only memory (ROM), electrically erasable programmable read-only memory (EEPROM), flash memory or other memory technology, compact disc read-only memory (CD-ROM), digital video disk (DVD) or other optical storage, magnetic cassette tape, disk storage, quantum memory, graphene-based storage medium or other magnetic storage device or any other non-transmission medium, which can be used to store information that can be accessed by computing devices. As defined herein, computer-readable medium does not include transitory media (transitory media), such as modulated data signals and carriers.

It should also be noted that the term "include", "contain" or any other variation thereof is intended to cover non-exclusive inclusion, so that a process, method, good or device including a set of elements includes not only those elements but also other elements not expressly listed or that are inherent to the process, method, good or device. In the absence of further restrictions, an element qualified by the sentence "including a..." does not preclude the existence of additional identical elements in a process, method, product or equipment including the element.

Specific embodiments of the present disclosure are described above. Other embodiments are within the scope of the attached claims. In some cases, the actions or steps described in the claim may be performed in a different order than in the embodiment and still achieve a desired result. In addition, the process depicted in the accompanying drawings does not necessarily require a specific sequence or sequential sequence to achieve the desired result. In some implementations, multitasking and parallel processing are also possible or may be advantageous.

Terms used in one or more embodiments of the present application are used solely for the purpose of describing specific embodiments and are not intended to limit one or more embodiments of the present application. The terms "a", "said" and "the" in the singular form as used in one or more embodiments of the present application and the accompanying claims are also intended to include the majority form, unless the context clearly indicates otherwise. It should also be understood that the term "and/or" as used in this text refers to and encompasses any or all possible combinations of one or more related listed items.

It should be understood that although the terms first, second and third classes may be used to describe various information in one or more embodiments of the present application, such information should not be limited to these terms. These terms are used only to distinguish the same type of information from one another. For example, without departing from the scope of one or more embodiments of the present application, first information may also be referred to as second information, and likewise second information may be referred to as first information. Depending on the context, the word "if" as used here can be interpreted as "at time of..." or "when..." or "in response to determination of".

The above is only a better embodiment of one or more embodiments of the present disclosure and is not intended to limit one or more embodiments of the present disclosure. Any modification, equivalent replacement, improvement, etc. made within the spirit and principles of one or more embodiments of the present disclosure shall be included within the scope of protection of one or more embodiments of the present disclosure.

## Claims

1. A flow control method, applied to a cloud server, wherein the cloud server stores data provided to users with different priorities to access, and bandwidth resources on the cloud server are periodically allocated to the user sets; the method comprises:

   in response to an end of a previous resource allocation cycle of the bandwidth resources, calculating a first quantity of allocable bandwidth resources corresponding to the user sets with different priorities respectively in a current resource allocation cycle according to a quantity of bandwidth resources allocated to the user sets with different priorities in the previous resource allocation cycle;
   further calculating a second quantity of allocable bandwidth resources corresponding to each user in the user sets with different priorities according to the first quantity; and
   in response to an access request for the data initiated by a user received in the current resource allocation cycle, performing access control for the access request based on the second quantity of the allocable bandwidth resources corresponding to the user.

2. The method according to claim 1, further comprising:
   allocating the bandwidth resources to the user sets with different priorities according to a preset ratio between the different priorities at initialization.

3. The method according to claim 1, wherein the priority comprises high priority, medium priority and low priority; wherein the calculating the first quantity of the allocable bandwidth resources corresponding to the user sets with different priorities respectively in the current resource allocation cycle according to the total quantity of the bandwidth resources allocated to the user sets with different priorities in the previous resource allocation cycle comprises:

   counting a quantity H1 of bandwidth resources allocated to a user set with high priority, a quantity M1 of bandwidth resources allocated to a user set with medium priority, and a quantity L1 of bandwidth resources allocated to a user set with low priority in the previous resource allocation cycle; and

calculating the first quantity of the allocable bandwidth resources corresponding to the user sets with different priorities in the current resource allocation cycle by the following formula:

$$H2=MIN(H1, MAX (a*S, S-M1));$$

$$M2=MIN(M1, S-H2);$$

$$L2=S-H2-M2;$$

wherein, H2, M2, and L2 are quantities of the bandwidth resources allocated to the user sets with high priority, medium priority, and low priority, respectively, in the current resource allocation cycle; a is a preset value.

4. The method according to claim 1, wherein the further calculating the second quantity of the allocable bandwidth resources corresponding to each user in the user sets with different priorities according to the first quantity comprises: performing following processes for different priorities respectively:

determining a bandwidth resource occupied by each user in a user set with a current priority;

calculating a ratio of the bandwidth resource occupied by each user to bandwidth resources occupied by the user set with the current priority; and

calculating the second quantity of the allocable bandwidth resources corresponding to each user based on the ratio and the first quantity.

5. The method according to claim 1, wherein the data is accessed by the user via a token allocated by the cloud server; wherein the calculating the first quantity of the allocable bandwidth resources corresponding to the user sets with different priorities respectively in the current resource allocation cycle according to the quantity of the bandwidth resources allocated to the user sets with different priorities in the previous resource allocation cycle comprises:

calculating a quantity of allocable tokens corresponding to the user sets with different priorities respectively in the current resource allocation cycle according to a quantity of tokens allocated to the user sets with different priorities in the previous resource allocation cycle; and

calculating the first quantity of the allocable bandwidth resources corresponding to the user sets with different priorities respectively according to a ratio of the quantity of the allocable tokens corresponding to the user sets with different priorities to a total quantity of allocable tokens of the cloud server.

6. The method according to claim 1, wherein the in response to the access request for the data initiated by the user received in the current resource allocation cycle, performing access control for the access request based on the second quantity of the allocable bandwidth resources corresponding to the user comprises: sending the second quantity of the allocable bandwidth resources corresponding to each user in the user sets with different priorities to a client to which each user is located, so that the client, in response to that the user initiates the access request for the data in the current resource allocation cycle, performs access control for the access request based on the second quantity of the allocable bandwidth resources corresponding to the user.

7. A flow control method, applied to a client, wherein the method comprises:

receiving a second quantity of allocable bandwidth resources sent by a cloud server corresponding to each user in user sets with different priorities; wherein the second quantity is calculated by the cloud server according to a first quantity of allocable bandwidth resources corresponding to the user sets with different priorities in a current resource allocation cycle; the first quantity is calculated by the cloud server according to a quantity of bandwidth resources allocated to the user sets with different priorities in a previous resource allocation cycle of bandwidth resources in response to an end of the previous resource allocation cycle; wherein the cloud server stores data provided to users with different priorities to access; the bandwidth resources on the cloud server are periodically allocated to the user sets; and

in response to that a user initiates an access request for the data in the current resource allocation cycle, performing access control for the access request based on the second quantity of the allocable bandwidth resources corresponding to the user.

8. The method according to claim 7, wherein the in response to that the user initiates the access request for the data in the current resource allocation cycle, performing access control for the access request based on the second quantity of the allocable bandwidth resources corresponding to the user comprises:

in response to that the user initiates the access request for the data in the current resource allocation cycle, determining the second quantity of the allocable bandwidth resources corresponding to the user; judging whether a remaining quantity of the bandwidth resources corresponding to a user set to which the user belongs is smaller than the second quantity; and if yes, triggering flow control and adding the access request of the user to a QoS queue.

9. The method according to claim 8, wherein each user in the user sets with different priorities is further divided into three queue levels of high, medium and low; wherein the adding the access request of the user to the QoS queue comprises: adding the access request of the user to a QoS queue corresponding to the user set to which the user belongs, and determining a sort order of the access request of the user in the QoS queue according to a queue level corresponding to the user.

10. The method according to claim 9, further comprising: in response to that the cloud server redistributes the bandwidth resources, allocating the bandwidth resources for each access request in turn according to the sort order of the QoS queue, and sending the access request to the cloud server for processing based on the allocated bandwidth resources.

11. A flow control apparatus, applied to a cloud server, wherein the cloud server stores data provided to users with different priorities to access, and bandwidth resources on the cloud server are periodically allocated to the user sets; the apparatus comprises:

a first computing module, configured to, in response to an end of a previous resource allocation cycle of the bandwidth resources, calculate a first quantity of allocable bandwidth resources corresponding to the user sets with different priorities respectively in a current resource allocation cycle according to a quantity of bandwidth resources allocated to the user sets with different priorities in the previous resource allocation cycle; a second computing module, configured to further calculate a second quantity of allocable bandwidth resources corresponding to each user in the user sets with different priorities according to the first quantity; and a first control module, configured to, in response to an access request for the data initiated by a user received in the current resource allocation cycle, perform access control for the access request based on the second quantity of the allocable bandwidth resources corresponding to the user.

12. A flow control apparatus, applied to a client, wherein the apparatus comprises:

a receiving module, configured to receive a second quantity of allocable bandwidth resources sent by a cloud server corresponding to each user in user sets with different priorities; wherein the second quantity is calculated by the cloud server according to a first quantity of allocable bandwidth resources corresponding to the user sets with different priorities in a current resource allocation cycle; the first quantity is calculated by the cloud server according to a quantity of bandwidth resources allocated to the user sets with different priorities in a previous resource allocation cycle of bandwidth resources in response to an end of the previous resource allocation cycle; wherein the cloud server stores data provided to users with different priorities to access; the bandwidth resources on the cloud server are periodically allocated to the user sets; and a second control module, configured to, in response to that a user initiates an access request for the data in the current resource allocation cycle, perform access control for the access request based on the second quantity of the allocable bandwidth resources corresponding to the user.

13. An electronic device, comprising:

a processor; and a memory, configured to store processor executable instructions; wherein the processor is configured to execute the executable instructions to implement the steps of the method according to any one of claims 1 to 10.

14. A machine readable storage medium, wherein the machine readable storage medium stores machine readable instructions, when the instructions are executed by a processor, the steps of the method according to any one of claims 1 to 10 are implemented.

| User set with priority A | User set with priority B | User set with priority C |
|---|---|---|
| User A1 | User B1 | User C1 |
| User A2 | User B2 | User C2 |
| . . . | . . . | . . . |
| User An | User Bn | User Cn |

Cloud server

Data

FIG. 1

In response to an end of a previous resource allocation cycle of the bandwidth resources, calculating a first quantity of allocable bandwidth resources corresponding to the user sets with different priorities respectively in a current resource allocation cycle according to a quantity of bandwidth resources allocated to the user sets with different priorities in the previous resource allocation cycle — 201

Further calculating a second quantity of allocable bandwidth resources corresponding to each user in the user sets with different priorities according to the first quantity — 202

In response to an access request for the data initiated by a user received in the current resource allocation cycle, performing access control for the access request based on the second quantity of the allocable bandwidth resources corresponding to the user — 203

FIG. 2

Receiving an access request for data initiated by a user — 301

Determining a quantity of allocable bandwidth resources corresponding to the user in a current resource allocation cycle — 302

Judging whether a remaining quantity of bandwidth resources corresponding to a user set to which the user belongs is smaller than the quantity — 303

Yes

No

Triggering flow control and adding the access request of the user to a QoS queue of a server — 305

Determining a queue level corresponding to the user — 306

Determining a sort order of the access request of the user in the QoS queue according to the queue level corresponding to the user — 307

Enabling QoS queue to dequeue — 308

Processing the access request initiated by the user — 304

FIG. 3

FIG. 4

FIG. 5

| Receiving a second quantity of allocable bandwidth resources sent by a cloud server corresponding to each user in user sets with different priorities | 601 |

↓

| In response to that a user initiates an access request for the data in the current resource allocation cycle, performing access control for the access request based on the second quantity of the allocable bandwidth resources corresponding to the user | 602 |

FIG. 6

Receiving a quantity of allocable bandwidth resources sent by a cloud server corresponding to each user in user sets with different priorities ⟋ 701

Receiving an access request for data initiated by the user ⟋ 702

Determining a quantity of allocable bandwidth resources corresponding to the user in a current resource allocation cycle ⟋ 703

Judging whether a remaining quantity of bandwidth resources corresponding to a user set to which the user belongs is smaller than the quantity ⟋ 704

Yes → Triggering flow control and adding the access request of the user to a QoS queue of the client ⟋ 706

Determining a queue level corresponding to the user ⟋ 707

Determining a sort order of the access request of the user in the QoS queue according to the queue level corresponding to the user ⟋ 708

Enabling the QoS queue to dequeue ⟋ 709

No ↓

Sending the access request initiated by the user to the cloud server ⟋ 705

FIG. 7

FIG. 8

FIG. 9

FIG. 10

## INTERNATIONAL SEARCH REPORT

| International application No. |
| --- |
| **PCT/CN2023/095622** |

| A. | CLASSIFICATION OF SUBJECT MATTER |
| --- | --- |
| | H04L47/62(2022.01)i |

According to International Patent Classification (IPC) or to both national classification and IPC

| B. | FIELDS SEARCHED |
| --- | --- |

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI: 资源, 流量, 带宽, 分配, 集合, 集群, 队列, 当前, 周期, 间隔, 时段, 期间, 时间, 时隙, 优先级, 级别, 等级, resource, traffic, bandwidth, BW, allocation, set, cluster, queue, period, interval, time, slot, priority, level

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 114666284 A (ALIBABA (CHINA) CO., LTD.) 24 June 2022 (2022-06-24) <br> claims 1-14 | 1-14 |
| Y | CN 102577500 A (ALCATEL LUCENT) 11 July 2012 (2012-07-11) <br> description, paragraphs [0005]-[0073] | 1, 2, 4-14 |
| Y | CN 111352736 A (PING AN LIFE INSURANCE COMPANY OF CHINA, LTD.) 30 June 2020 (2020-06-30) <br> description, paragraphs [0031]-[0056] | 1, 2, 4-14 |
| A | CN 111488135 A (ZHUHAI GREE ELECTRIC APPLIANCES INC.) 04 August 2020 (2020-08-04) <br> entire document | 1-14 |
| A | CN 113038609 A (KYLAND TECHNOLOGY CO., LTD.) 25 June 2021 (2021-06-25) <br> entire document | 1-14 |
| A | US 2017149690 A1 (DELL PRODUCTS LP.) 25 May 2017 (2017-05-25) <br> entire document | 1-14 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **18 August 2023** | **10 September 2023** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

| International application No. |
| --- |
| **PCT/CN2023/095622** |

| Patent document cited in search report | | | Publication date (day/month/year) | Patent family member(s) | | | Publication date (day/month/year) |
| --- | --- | --- | --- | --- | --- | --- | --- |
| CN | 114666284 | A | 24 June 2022 | None | | | |
| CN | 102577500 | A | 11 July 2012 | US | 2011069666 | A1 | 24 March 2011 |
| | | | | US | 8159953 | B2 | 17 April 2012 |
| | | | | WO | 2011037875 | A1 | 31 March 2011 |
| | | | | KR | 20120053049 | A | 24 May 2012 |
| | | | | KR | 101402533 | B1 | 30 May 2014 |
| | | | | JP | 2013506344 | A | 21 February 2013 |
| | | | | JP | 5643314 | B2 | 17 December 2014 |
| | | | | EP | 2481240 | A1 | 01 August 2012 |
| CN | 111352736 | A | 30 June 2020 | None | | | |
| CN | 111488135 | A | 04 August 2020 | None | | | |
| CN | 113038609 | A | 25 June 2021 | None | | | |
| US | 2017149690 | A1 | 25 May 2017 | None | | | |

Form PCT/ISA/210 (patent family annex) (July 2022)

**REFERENCES CITED IN THE DESCRIPTION**

**Patent documents cited in the description**

- CN 202210563387